# EUROPEAN PATENT SPECIFICATION

(11) **EP 0 387 269 B1**
(45) Date of publication and mention of the grant of the patent: **02.06.1993**
(21) Application number: 88909585.7
(22) Date of filing: 03.11.1988
(51) Int. Cl.: B60G 21/00

(54) **VEHICLE SUSPENSION SYSTEMS**
FAHRZEUGFEDERUNG
SYSTEMES DE SUSPENSION POUR VEHICULE

(30) Priority: 03.11.1987 GB 8725658; 03.09.1988 GB 8821864
(43) Date of publication of application: 19.09.1990
(73) Proprietor: GKN TECHNOLOGY LIMITED, Wolverhampton West Midlands WV4 6BW (GB)
(72) Inventor: MUMFORD, Michael, Anthony, Peterborough PE5 7AE (GB)
(74) Representative: Thorpe, Brian
(86) International application number: GB8800941
(87) International publication number: WO8904262

(56) References cited:
- EP-A- 0 188 289
- DE-A- 1 780 066
- DE-A- 2 844 413
- DE-A- 3 502 337
- DE-B- 1 630 278
- US-A- 4 050 710

## Description

This invention relates to vehicle suspension systems, and more particularly to the active control of vehicle suspension systems, that is to say the automatic adjustment of a system part or parts in response to vehicle operating parameters in order to provide an improved suspension performance.

One aspect of the design of vehicle suspension systems to which considerable effort has been devoted is that of attempting to minimise changes in vehicle attitude as a result of acceleration of the vehicle. Acceleration or deceleration of the vehicle while travelling in a straight line cause changes in the attitude of the vehicle in pitch, while lateral acceleration of the vehicle during cornering causes the vehicle to roll. One well known way in which vehicle roll can be controlled is by the use of a so-called torsional stabiliser bar or anti-roll bar, comprising a torsionally resilient member extending transversely of the vehicle, the opposite ends of which member are connected to appropriate suspension parts for the wheels of the vehicle at its opposite sides so that when the wheels are displaced vertically relative to the vehicle structure by different amounts the transverse resilient member is torsionally loaded. Thus such wheel displacement, and hence vehicle roll, is resisted. However, the design of such an anti-roll bar is a compromise because if it is too stiff the vehicle ride quality on uneven surfaces will deteriorate. Therefore, proposals have been made that the simple anti-roll bar as above described should be controlled so that its behaviour is modified under certain conditions.

For example, EP-A-0152914 discloses a stabiliser bar attached to a vehicle body by extensible hydraulic cylinders, to change the effectiveness of the stabiliser bar in accordance with variations in the running conditions of the vehicle. In accordance with sensed inputs such as vehicle steering angle or acceleration, a control system causes the hydraulic cylinders to extend or contract to vary the attitude of the stabiliser bar where it is attached to the vehicle body. However, such attitude of the stabiliser bar is not detected by the system, and therefore the degree by which the effectiveness of the stabiliser bar is varied cannot be precisely controlled to achieve a fully effective stabilisation of the vehicle.

DE-A-2844413 discloses a vehicle suspension system which includes a hydro-pneumatic accumulator connected to spring units at the four wheels of the vehicle, the spring units being individually hydraulically adjustable in response to vehicle acceleration. The position of the piston in each spring unit is measured and the signal representing such piston position is fed back to the control unit which controls the adjustment of the spring units.

However, the system disclosed in DE-A-2844413, being a system in which all springing of the vehicle, as well as control over roll thereof during cornering, is provided by fluid pressure spring units, has a high degree of complexity. It is desirable if some of the benefits of such a system can be achieved, e.g. in a vehicle with conventional springing, by use of anti-roll stabilizer bars which are able to have their effectiveness adjusted in accordance with vehicle operating conditions.

Further examples of systems which provide a degree of control over roll of a vehicle are disclosed in GB-A-1075481 and GB-A-1037312. However, there is a need for improvements in these previous systems, and the object of the present invention is to provide such improvements.

According to the invention we provide a suspension system, adjustable in response to an acceleration signal provided by an acceleration sensing means sensing vehicle lateral acceleration, for a vehicle having a first pair of wheels, on opposite sides of the vehicle at the front thereof, and a second pair of wheels, on opposite sides of the vehicle at the rear thereof, characterised by:
a first anti-roll torsion bar, having opposite ends connected to the wheels of said first pair thereof;
a second anti-roll torsion bar having opposite ends connected to the wheels of said second pair thereof;
each of said torsion bars being operable to resist roll of the vehicle;
respective fluid pressure actuators operable on each of said torsion bars to effect a positional adjustment thereof, thereby to change the loading of the torsion bars, said fluid pressure actuators being connected so that fluid can flow between them;
respective means for measuring the adjusted positions of said torsion bars as determined by said actuators, and providing respective signals representative of said positions;
control means for controlling operation of said actuators, said control means being responsive to said acceleration signal to determine a required average of the two adjusted positions of said torsion bars, and operable to cause said actuators to adjust said positions until the required average adjusted position thereof is reached.

The torsional adjustment between the opposite ends of each torsion bar may be effected directly by a suitable actuator, e.g. a fluid pressure actuator, having a torsional output operative between respective parts of the torsion bar. Alternatively an actuator may adjust the position relative to the structure of the vehicle of a portion of the torsion bar, between said opposite ends thereof, which is mounted to the structure of the vehicle.

Whether the torsional adjustment in each torsion bar is effected directly by an actuator which has a torsional output, or by an actuator which adjusts the position of a portion of the torsion bar relative to the vehicle structure, the adjusted position of each torsion bar is measured (e.g. by measuring the position set by the actuator which causes such adjustment) and a signal representative of such measured position is fed back to the control means of the system. The control means stores a range of required values of the average position corresponding to the magnitude of sensed vehicle acceleration, and operates so that the adjusted position corresponds to the acceleration. The relationship between acceleration and adjusted position may be a linear relationship, or otherwise to suit the vehicle.

By virtue of such controlled relationship between vehicle acceleration and adjusted position of each torsion bar, a much improved suspension performance is obtained.

Although it is possible to rely on the torsional resilience of each torsion bar to return the adjustment means therefor to its previous state upon cessation of vehicle acceleration, it is preferred that the control means is operable positively to cause such return. A quicker response is thereby obtained.

The invention will now be described by way of example with reference to the accompanying drawings, in which:-
Figure 1 is a diagrammatic front elevation of a suspension for a pair of wheels of a vehicle, incorporating an adjustable anti-roll torsion bar.
Figure 2 is a plan view of the suspension of Figure 1.
Figure 3 is a schematic diagram of a suspension according to the invention.
Figure 4 is a diagrammatic front elevation of a further embodiment of suspension.
Figure 5 is a diagrammatic plan view of the suspension of Figure 4.
Figures 6 & 7 are enlarged diagrammatic side and front elevations of the torsion bar assembly of the suspension of Figure 4.

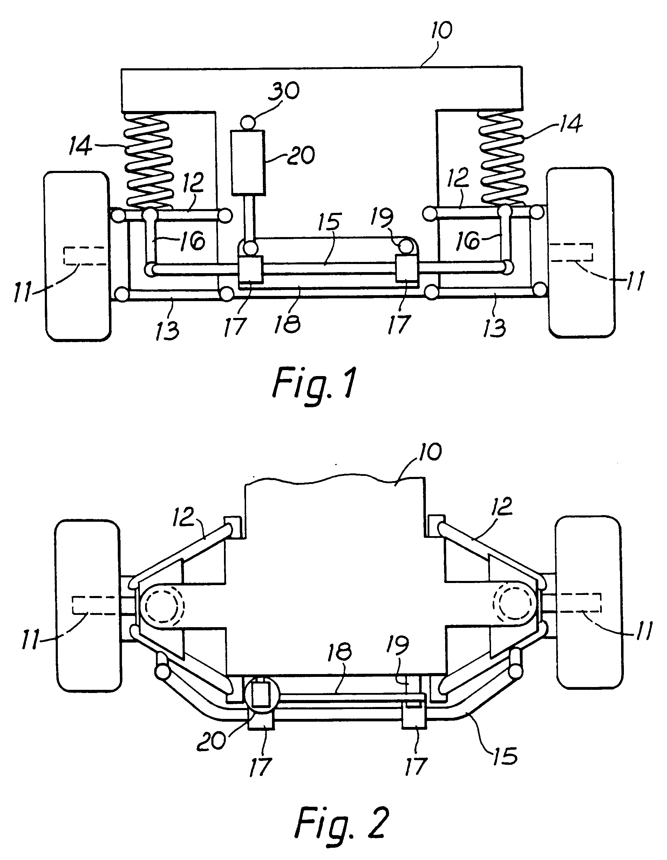

Referring firstly to Figures 1 and 2 of the drawings, there is shown a vehicle chassis 10 to which a pair of wheels, front or rear, rotatable on axles 11, are connected by upper and lower wishbones 12, 13. The wishbones 12, 13 are pivotally connected to the chassis 10 and to wheel carrier members in known manner. A respective spring 14 acts between each of the wishbones 12 and the chassis 10.

An anti-roll bar in the form of a torsion bar spring 15 extends transversely of the vehicle, the spring 15 having each end portion cranked to form levers pivotally connected through rigid links 16 to the upper wishbones 12. Between its cranked end portions, the central portion of the torsion bar spring 15 is pivotally supported in bearings 17 for angular movement about its axis. Bearings 17 are attached to an adjustable mounting plate 18 extending transversely of the vehicle, one end of the mounting plate being pivotally connected by a pivot 19 to the vehicle chassis. The other end of the mounting plate 18 is connected to the output element of a double acting hydraulic actuating ram 20, the ram 20 being connected at 30 to the vehicle chassis. The ram 20 also incorporates a position transducer, not shown, which gives an electrical output signal representative of the position of the output element of the ram. When the mounting plate 18 is in a horizontal position relative to the chassis 10, as illustrated, no torsional load exists in the torsion bar spring 15 assuming that no such load is imposed due to different relative vertical movements of the wheels relative to the vehicle chassis.

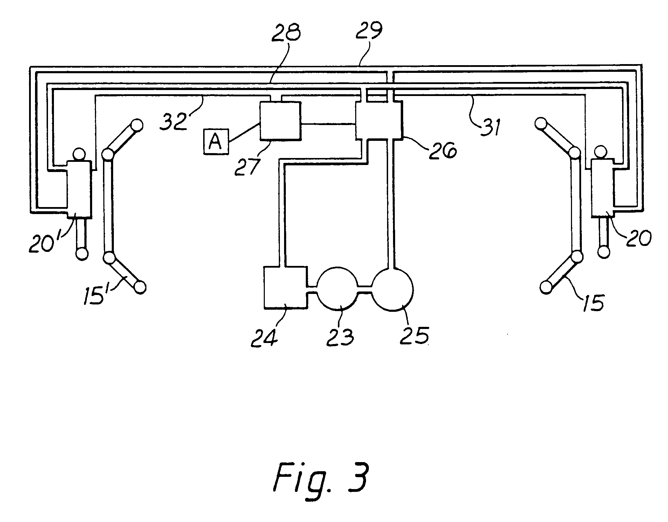

Referring now to Figure 3 of the drawings, there is shown diagrammatically a suspension system according to the invention wherein a first anti-roll torsion bar spring 15 is provided at one end, front or rear, of the vehicle to interconnect the wheels at that end, and a further anti-roll torsion bar spring 15¹ is provided at the other end of the vehicle to interconnect the other pair of wheels of the vehicle. Respective hydraulic actuating rams 20, 20¹ are associated with the springs 15, 15¹. The suspension includes an hydraulic circuit comprising a reservoir 24 for hydraulic fluid, and a pump 23 delivering the fluid at high pressure to an accumulator 25. The pump 23 may be driven from the vehicle's engine, with a re-circulating valve operable to prevent further delivery of fluid to the accumulator 25 when the accumulator has been charged to its operative pressure. From the accumulator, a pipe leads to a valve unit 26 from which output pipes 28, 29 lead to the rams 20, 20¹. The pipe 28 connects to the upper operating chambers of the rams 20, 20¹ and the pipe 29 to the lower operating chambers of the rams, so that the fluid may be transferred to and from the rams together to control the position thereof, the pressures in the rains being balanced by their hydraulic connection through pipes 28, 29. Also from the valve unit a pipe leads to the fluid reservoir 24, for the return of fluid released from the rams.

Electrical connections 31, 32 lead from the position transducers provided in the rams 20, 20¹, to a control unit 27. The control unit also receives a signal from an accelerometer A, which is arranged to detect lateral acceleration of the vehicle. The mode of operation of the control unit 27 is that it stores a table of values of lateral acceleration and, associated therewith, required positions of the actuating rams 20, 20¹. When a lateral acceleration is detected by the accelerometer A and the corresponding output signal applied to the control unit 27, the control unit compares the average position of the rams 20, 20¹ with the required such position thereof corresponding to such acceleration. Any error between the actual positions of the rams and the pre-determined required position thereof will cause the valve unit 26 to operate, to deliver and allow release of the fluid appropriately to the rams until the rams assume the required positions and the error is eliminated. Thus the anti-roll torsion bars are loaded to counteract the effect on the vehicle of the lateral acceleration.

By way of example, if Figure 1 is considered to be a rear elevation of the vehicle which is cornering to the right, the vehicle will tend to roll to the left due to centrifugal force acting through its centre of gravity, which normally will be above the roll axis of the vehicle. To counteract this requires an extension of the ram 20 (and the ram 20¹ at the other end of the vehicle), and hydraulic fluid is applied to the rams to cause them to extend until they reach a position corresponding to the particular lateral acceleration experienced by the vehicle. The extension of the ram 20 alters the angle of the mounting plate 18 relative to the vehicle chassis, and establishes a torsional loading in the bar 15 which counteracts the attempted roll of the vehicle. Similarly should the vehicle corner in the opposite direction, the rams are caused to retract and load the torsion bars in the opposite sense.

When cornering has ceased, and the lateral acceleration of the vehicle, as detected by the accelerometer, reduces to zero, the control unit determines that the rams 20, 20¹ are required to return to their positions they had before the cornering manoeuvre began. The control unit causes the valve unit to operate so that the rams return to such positions. This may be by allowing fluid to flow to and from the appropriate operating chambers of the rams, so that they return to their previous positions by virtue of the relaxation of the torsional loading applied to the torsion bars 15, 15¹ during cornering. Preferably, however, the valve unit is caused to deliver fluid under pressure to the rams, positively to return them to their previous positions, thereby achieving a faster response to the end of the cornering manoeuvre.

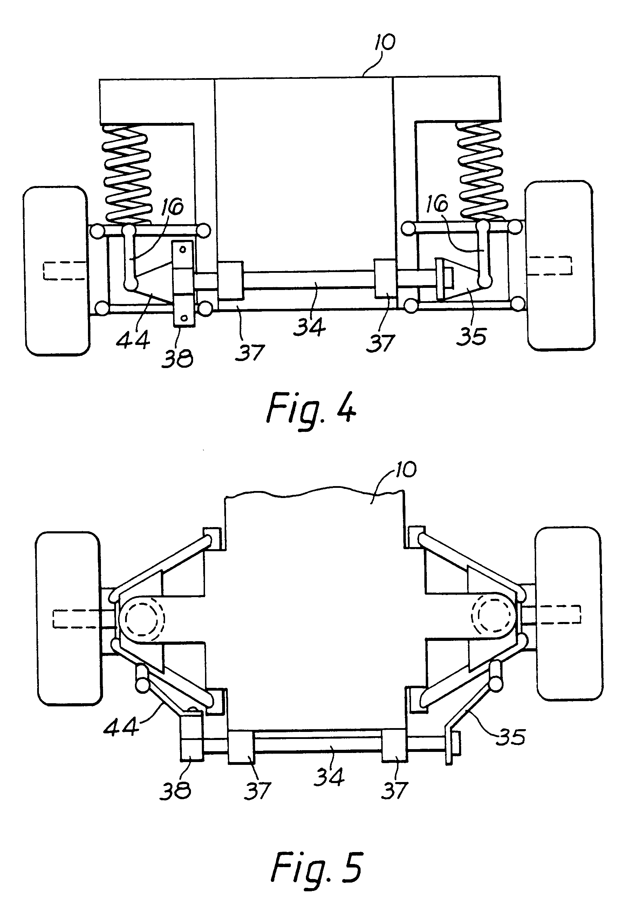

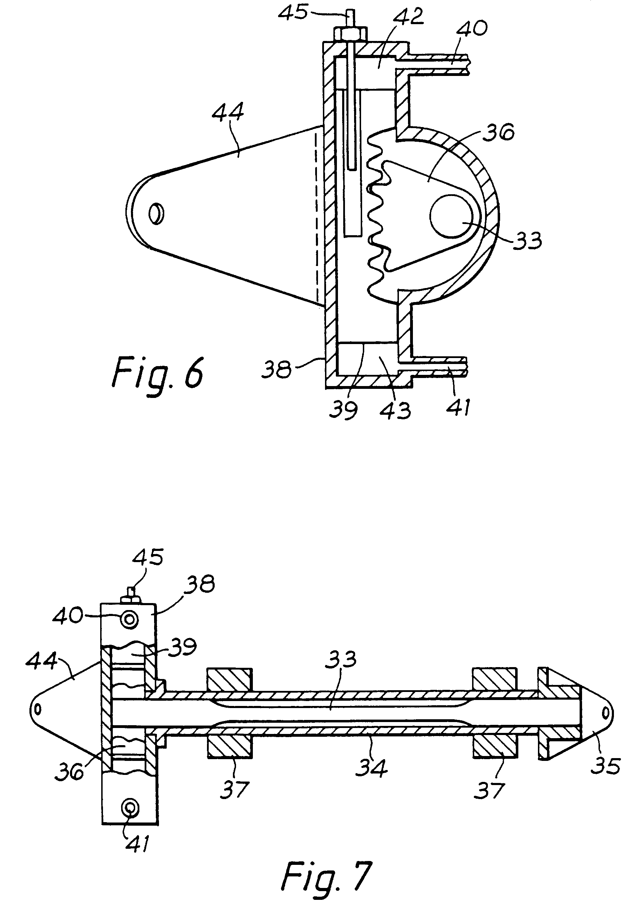

Referring now to Figures 4-7 of the drawings, these show details of a suspension system which differs from that above described in respect of the mounting of each anti-roll torsion bar, and the manner in which torsional loads are established therein to resist vehicle roll. A control arrangement as described in relation to Figure 3 would be utilized. In Figures 4 - 7, an anti-roll torsion bar 33 is enclosed and supported with rotational freedom at each end in a tubular housing 34 connected to the vehicle chassis. One end of the torsion bar 33 is rigidly connected to a lever arm 35, thus to be connected by a link 16 to the upper wishbone at one side of the vehicle. The other end of the torsion bar is rigidly connected to a sector pinion 36. The housing 34 for the torsion bar 33 is rotationally mounted in bearing blocks 37 to the vehicle chassis. To one end of the housing 34 is fixed an hydraulic cylinder 38 containing a double ended piston 39, having a central portion gear cut to form a rack engaged with the sector pinion 36. Ports 40, 41 provide for hydraulic connection to chambers 42, 43 respectively defined between the two ends of the piston 39 and the cylinder 38. In the hydraulic circuit shown in Figure 3, port 40 would be connected to the pipe 28, and port 41 to the pipe 29. Rigidly connected to the cylinder 38 is a lever arm 44 which is connected, by a rigid link 16, to the upper wishbone at the side of the vehicle opposite the wishbone connected to the lever arm 35. A position-detecting transducer 45 is secured to the cylinder 38, to detect the position of the piston 39 within the cylinder and provide an output signal representative of such position.

In use, the way in which the suspension shown in Figures 4 - 7 operates is substantially the same as that above described in relation to Figures 1-3, differing only in respect of the way in which the anti-roll torsion bar spring 33 is adjusted in response to vehicle lateral acceleration during cornering. Instead of actuating ram 20 being adjusted, the position of piston 39 within cylinder 38 is adjusted to a pre-determined required position in accordance with the lateral acceleration of the vehicle as detected by the accelerometer.

As for the system of Figures 1 to 3, after cornering has ceased, the piston 39 is preferably positively returned to its previous position within cylinder 38 by supply of fluid under pressure to the appropriate chamber 42 or 43 while fluid is released from the other of the chambers.

As an alternative to detecting the position of the piston 39 in the cylinder 38, to provide a signal representing the positional adjustment applied to the torsion bar spring 33, it would be possible to detect and measure a torsional displacement occurring between spaced parts of the torsion bar as a result of movement of the piston 39. For example, a rotary potentiometer could be arranged to be moved directly by such torsional displacement.

A further possibility is that a rotary hydraulic actuator could be used instead of the arrangement of cylinder 38, piston 39, and sector pinion 36, to adjust torsionally the torsion bar 33.

## Claims

1. A suspension system, adjustable in response to an acceleration signal provided by an acceleration sensing means (A) sensing vehicle lateral acceleration, for a vehicle having a first pair of wheels, on opposite sides of the vehicle at the front thereof, and a second pair of wheels, on opposite sides of the vehicle at the rear thereof, characterised by:
a first anti-roll torsion bar (15), having opposite ends connected to the wheels of said first pair thereof;
a second anti-roll torsion bar (15¹) having opposite ends connected to the wheels of said second pair thereof;
each of said torsion bars being operable to resist roll of the vehicle;
respective fluid pressure actuators (20, 20¹) operable on each of said torsion bars to effect a positional adjustment thereof, thereby to change the loading of the torsion bars, said fluid pressure actuators being connected so that fluid can flow between them;
respective means for measuring the adjusted positions of said torsion bars as determined by said actuators, and providing respective signals representative of said positions;
control means (27,26) for controlling operation of said actuators, said control means being responsive to said acceleration signal to determine a required average of the two adjusted positions of said torsion bars, and operable to cause said actuators to adjust said positions until the required average adjusted position thereof is reached.

2. A suspension system according to Claim 1 further characterised in that each said actuator has a torsional output operative between respective parts of the torsion bar.

3. A suspension system according to Claim 1 further characterised in that each said actuator is operable to adjust the position relative to the structure of the vehicle, of a portion of the torsion bar mounted to the structure of the vehicle.

4. A suspension system according to any one of Claims 1 to 3 further characterised in that said control means (27, 26) is operable to cause the actuators positively to return the torsion bars to a previous state of torsional adjustment upon cessation of vehicle acceleration.

## Patentansprüche

1. Aufhängungssystem, das in Reaktion auf ein Beschleunigungssignal von einem Beschleunigungsfühlermittel (A), welches die seitliche Beschleunigung des Fahrzeugs erfaßt, einstellbar ist, für ein Fahrzeug mit einem ersten Paar Rädern, die sich auf gegenüberliegenden Seiten am Fahrzeugvorderteil befinden und einem zweiten Paar Rädern, die sich an gegenüberliegenden Seiten an dessen Heckteil befinden,
gekennzeichnet durch
einen ersten Torsionsstabilisator (15), dessen gegenüberliegende Enden mit den Rädern des ersten genannten Paares verbunden sind,
einen zweiten Torsionsstabilisator (15 1), dessen gegenüberliegende Enden mit den Rädern des zweiten genannten Paares verbunden sind,
wobei jeder der Stabilisatoren betätigbar ist, um Rollbewegungen des Fahrzeugs zu hemmen,
jeweilige fluiddruckbetätigte Aktuatoren (20, 20'1), die auf jeden der Torsionsstäbe einwirken, um eine Positionseinstellung bei ihnen zu bewirken, wodurch die Belastung der Torsionsstäbe verändert wird und wobei die genannten fluiddruckbetätigte Aktuatoren so verbunden sind, daß Fluid zwischen ihnen fließen kann,
jeweilige Mittel zum Messen der eingestellten Positionen der Torsionsstäbe, wie sie durch die genannten Aktuatoren verändert wurden, und zur Bereitstellung entsprechender Signale, die den genannten Positionen entsprechen,
Steuermittel (26, 27) zum Steuern der genannten Aktuatoren, wobei die genannten Steuermittel auf das genannte Beschleunigungssignal ansprechen, um einen erforderlichen Durchschnitt zwischen den zwei eingestellten Positionen der genannten Torsionsstäbe zu ermitteln und so betrieben werden, daß die genannten Aktuatoren die Positionen so weit korrigieren, bis die notwendige Durchschnittsposition zwischen ihnen erreicht ist.

2. Aufhängungssystem nach Anspruch 1, ferner
dadurch gekennzeichnet,
daß jeder genannte Aktuator eine Torsion bewirkende Ausgangsgröße erzeugt, die zwischen den jeweiligen Teilen des Torsionsstabes wirksam ist.

3. Aufhängungssystem nach Anspruch 1, weiterhin
dadurch gekennzeichnet,
daß jeder Aktuator in der Lage ist, die Position eines mit dem Fahrzeugaufbau verbundenen Teils des Torsionsstabes gegenüber dem Fahrzeugaufbau zu verstellen.

4. Aufhängungssystem nach einem der Ansprüche 1 bis 3, weiterhin
dadurch gekennzeichnet,
daß die genannten Steuermittel (27, 26) betrieben werden, um zu bewirken, daß die Betätigungsglieder die Torsionsstäbe definitiv in einen früheren Torsionseinstellungszustand bei Beendigung der Fahrzeugbeschleunigung zurückversetzbar sind.

## Revendications

1. Dispositif de suspension, réglable en fonction d'un signal d'accélération fourni par un moyen (A) de détection de l'accélération, qui détecte l'accélération latérale d'un véhicule, destiné à un véhicule qui comporte une première paire de roues sur les côtés opposés de son avant et une deuxième paire de roues sur les côtés opposés de son arrière, caractérisé par :
- une première barre de torsion (15) anti-roulis, dont les extrémités opposées sont reliées aux roues de ladite première paire,
- une seconde barre de torsion (15') anti-roulis, dont les extrémités opposées sont reliées aux roues de ladite seconde paire, chaque barre de torsion étant utilisable pour s'opposer au roulis du véhicule,
- des vérins hydrauliques (20, 20') respectifs, actionnables sur chacune desdites barres de torsion pour en régler la position, modifiant ainsi la répartition de charge sur les barres, lesdits vérins hydrauliques étant reliés de telle sorte que le fluide peut s'écouler entre eux,
- des moyens respectifs qui servent à mesurer les positions dans lesquelles ont été réglées les barres de torsion par lesdits vérins et qui produisent des signaux respectifs représentatifs desdites positions,
- des moyens de commande (27, 26) pour commander le fonctionnement desdits vérins, lesdits moyens de commande répondant audit signal d'accélération pour déterminer une valeur moyenne requise des deux positions réglées desdites barres de torsion et étant utilisables pour amener lesdits vérins à ajuster lesdites positions jusqu'à ce que la position moyenne de réglage requise soit atteinte.

2. Dispositif de suspension selon la revendication 1, caractérisé en outre par le fait que chacun desdits vérins comporte une sortie de torsion agissant entre les parties respectives de la barre de torsion.

3. Dispositif de suspension selon la revendication 1, caractérisé en outre en ce que chacun desdits vérins est utilisable pour ajuster la position, par rapport à la structure du véhicule, d'une partie de la barre de torsion fixée à la structure du véhicule.

4. Dispositif de suspension selon l'une quelconque des revendications 1 à 3, caractérisé en outre en ce que lesdits moyens de commande (27, 26) sont utilisables pour amener les vérins à ramener effectivement les barres de torsion vers un état antérieur de réglage de torsion lorsque cesse l'accélération du véhicule.
